(19) Europäisches Patentamt
European Patent Office
Office européen des brevets

(11) **EP 1 122 518 B1**

(12) **EUROPÄISCHE PATENTSCHRIFT**

(45) Veröffentlichungstag und Bekanntmachung des Hinweises auf die Patenterteilung:
**30.01.2008 Patentblatt 2008/05**

(51) Int Cl.:
***G01C 21/34*** *(2006.01)*

(21) Anmeldenummer: **01102451.0**

(22) Anmeldetag: **03.02.2001**

(54) **Verfahren zur Decodierung von linienförmigen geographischen Objekten**

Method for decoding lineshaped geographical objects

Procédé pour décodage d'objets de forme linéaire et géographique

(84) Benannte Vertragsstaaten:
**DE FR GB**

(30) Priorität: **04.02.2000 DE 10004966**
**05.08.2000 DE 10038343**

(43) Veröffentlichungstag der Anmeldung:
**08.08.2001 Patentblatt 2001/32**

(73) Patentinhaber: **ROBERT BOSCH GMBH**
**70442 Stuttgart (DE)**

(72) Erfinder:
• **Hahlweg, Cornelius**
**31139 Hildesheim (DE)**
• **Brandes, Henry**
**31556 Woelpinghausen (DE)**

(56) Entgegenhaltungen:
**EP-A- 0 317 181     DE-A- 19 638 515**
**DE-A- 19 911 676**

Printed by Jouve, 75001 PARIS (FR)

**Beschreibung**

Die Erfindung betrifft ein Verfahren zur Decodierung von linienförmigen geographischen Objekten mit Hilfe einer Datenbank, die ein Verkehrswegenetz mit linienförmigen Objekten enthält.

Zur Übertragung von ortsbezogenen Informationen, beispielsweise Verkehrsmeldungen, sind verschiedene Verfahren bekanntgeworden. So wird beispielsweise beim TMC (traffic message channel) ein Ort anhand eines Ortscodes übertragen. Seine geographische Lage und damit auch die örtliche Zuordnung der Meldung werden erst durch eine sogenannte Ortsdatenbank im Empfänger ermöglicht. Zu Navigationszwecken werden digitale Straßenkarten verwendet, bei denen die einzelnen Orte und andere Objekte durch ihre geographische Lage und durch ihre Straßenverbindungen gekennzeichnet sind. Zur Übertragung beliebiger ortsbezogener Informationen an Empfänger, die eine geeignete Datenbank enthalten, erfolgt daher in zunehmenden Maße eine Codierung - auch Referenzierung genannt - mit Hilfe eines geographischen Kontextes. Diese Referenzierung geht über die Angabe von geographischen Daten hinaus, da diese Daten Mehrdeutigkeiten nicht ausschließen können (beispielsweise eine Straße unter oder über einer Brücke). Außerdem können Abweichungen der Datenbanken, beispielsweise verschiedener Hersteller, vorliegen.

Aus DE 198 35 051.1 ist eine Einrichtung zur Codierung und zur Decodierung von Orten bekanntgeworden, bei welchen der Code aus einem Vereinbarungsteil und je einem codierten Ort aus allen Koordinatenteilen besteht, der mehrere Koordinatenpaare enthält, wobei ein Koordinatenpaar die senderseitig gespeicherten Koordinaten des codierten Ortes und mindestens ein weiteres Koordinatenpaar mindestens einen Hilfspunkt darstellt und der Vereinbarungsteil mindestens die Anzahl dieser im Koordinatenteil enthaltenen Koordinatenpaare enthält. Mit dieser Einrichtung ist es jedoch nicht ohne weiteres möglich, Objekte zu codieren und zu decodieren, die in der empfängerseitigen Datenbank nicht vorhanden sind.

Dieser Nachteil wird mit einem Verfahren zur Codierung und Decodierung von Objekten in einem Verkehrswegenetz gemäß DE 199 42 524.8 dadurch vermieden, daß die Objekte mit jeweils mindestens einer Koordinatenkette versehen werden, die mindestens teilweise auf Verkehrswegen liegt, die auch in der Datenbank des Empfängers enthalten sind, und charakteristische Eigenheiten von Teilen des Verkehrswegenetzes umfaßt. Dabei können die charakteristischen Eigenheiten markante Verläufe der Wege, insbesondere Kurven und ausgeprägte Folgen von Kreuzungen, Abzweigungen und/oder Kurven oder Objekte sein, die in jeder der verwendeten Datenbanken gleichartig referenziert abgelegt sind.

Zur Decodierung wird dabei vorgeschlagen, die Koordinatenkette, die mit dem Objekt empfangen wurde, mit der Datenbank des Empfängers zu vergleichen und bei Vorliegen von Ähnlichkeiten, die mindestens eine Koordinatenkette dem ähnlichen Teil des Verkehrswegenetzes zuzuordnen.

Die vorliegende Erfindung hat die Aufgabe, den Vergleich und die Zuordnung in möglichst einfacher Weise zu realisieren. Diese Aufgabe wird erfindungsgemäß dadurch gelöst, daß jeweils eine Menge von Punkten eines zu decodierenden - Objekts und der Objekte des Verkehrswegenetzes gebildet wird, daß für mehrere relative Lagen der Punktmengen zueinander für eine der Punktmengen die Zahl von Punkten ermittelt wird, welche innerhalb eines vorgegebenen Abstandes mindestens eines Punktes der anderen Punktmenge liegen, und daß das zu decodierende Objekt in derjenigen relativen Lage, in der die Zahl am größten ist, durch Ausgabe des dann mit dem Objekt korrelierten Teils des Verkehrswegenetzes decodiert wird.

Das erfindungsgemäße Verfahren kann an sich mit beliebigen Darstellungen der Objekte angewandt werden, vorzugsweise ist jedoch vorgesehen, daß die Objekte als Vektoren vorliegen und daß eine Menge von im wesentlichen gleichbeabstandeten Punkten durch Interpolation gebildet werden. In der Regel werden dabei innerhalb jeweils eines Segments eines Objektes gleiche Abstände zwischen den Punkten gewählt, so daß das Segment durch die gewählten Punkte und den Anfangs- und Endpunkt in gleiche Teile aufgeteilt wird.

Diejenigen Punkte, die innerhalb des vorgegebenen Abstandes zu einem Punkt der anderen Punktmenge liegen, werden im folgenden auch als gefangene Punkte bezeichnet.

Zur Durchführung des erfindungsgemäßen Verfahrens ist es möglich, entweder die Punktmenge des zu decodierenden Objekts oder des in der Datenbank vorhandenen Objekts zu verschieben. Ferner kann die Zahl der gefangenen Punkte entweder auf die Punktmenge des zu decodierenden Objekts oder des Objekts der Datenbank bezogen sein.

Eine bei dem erfindungsgemäßen Verfahren verwendete Filtermaske wird bei einer vorteilhaften Ausführungsform dadurch gebildet, daß um die Punkte einer der Punktmengen ein Radius als vorgegebener Abstand geschlagen wird, der mindestens dem halben Abstand der Punkte innerhalb einer Punktmenge entspricht. Zur Vermeidung von Lücken ist es vorteilhaft, wenn der Radius dem Abstand der Punkte entspricht.

Eine noch genauere Verschiebung des zu decodierenden Objekts kann dadurch bewirkt werden, daß bei einer weiteren, feineren Verschiebung die Summe der Betragsquadrate der Vektorsummen der Differenzvektoren der einzelnen Punkte der Maske zu den jeweils gefangenen Punkten der Karte minimiert wird.

Eine vorteilhafte Ausgestaltung des erfindungsgemäßen Verfahrens besteht darin, daß die Verschiebung innerhalb eines orthogonalen Rasters erfolgt. Um dabei unnötige Rechenschritte zu vermeiden, kann bei dieser Ausgestaltung vorgesehen sein, daß die Verschiebung nur in einem Bereich vorgenommen wird, in dem mögliche Ablagen des zu decodierenden Objekts von den Objekten des Verkehrswegenetzes liegen. Die Verschiebung kann dabei zunächst unabhängig von der ermittelten Zahl von gefangenen Punkten für einen festgelegten Bereich erfolgen, worauf das Maximum der gefundenen Punkte ermittelt wird. Es ist jedoch auch möglich, aus der Zahl der gefangenen Punkte für aufeinanderfolgende Lagen entsprechend einer Suchstrategie die nachfolgenden Verschiebungen zu berechnen und so möglicherweise zu derjenigen Verschiebung mit der maximalen Zahl von gefangenen Punkten zu gelangen.

Mit dem erfindungsgemäßen Verfahren können Objekte decodiert werden, die an sich mit Objekten der Datenbank übereinstimmen, das heißt, welche die gleichen Endpunkte (Vektoren) aufweisen, jedoch beispielsweise durch Verwendung verschiedener Koordinaten nicht exakt mit den in der Datenbank gespeicherten Objekten korrelieren. Dies ist beispielsweise eine Straße von A über B nach C. Dieses Vorgehen kommt unter anderem in Betracht, wenn in einer Einrichtung eine Fahrtroute ermittelt wird, die zu einer anderen Einrichtung übertragen werden soll, wobei die andere Einrichtung über eine digitale Karte mit den gleichen Orten, jedoch abweichenden Koordinaten verfügt.

Das erfindungsgemäße Verfahren eignet sich ferner zur Decodierung von Objekten, die zwar auf den Linien des in der Datenbank gespeicherten Verkehrswegenetzes liegen, als solche in der Datenbank jedoch nicht enthalten sind. Dies ist beispielsweise das Ende S eines Staus vor dem Ort B auf einer Straße von A über B nach C. Wird nun das Ende dieses Staus ohne den direkten Zusammenhang mit den in der Datenbank enthaltenen Objekten als A, S, B, C übertragen, so wird durch das erfindungsgemäße Verfahren eine Decodierung von S dahingehend ermöglicht, daß S auf der in der Datenbank enthaltenen Straße von A nach B und in einer bestimmten Entfernung von B liegt.

Eine dritte Art von Objekten, die mit dem erfindungsgemäßen Verfahren decodiert werden können, sind Objekte, die nicht auf dem in der Datenbank abgelegten Verkehrswegenetz liegen - beispielsweise eine Jagdhütte J, die von der Straße A, B, C durch Abbiegen bei C auf einer nicht in der Datenbank vorhandene Straße erreicht werden kann. Diese Information wird als A', B', C', J codiert, empfangen und anschließend durch das erfindungsgemäße Verfahren der in der Datenbank abgelegten Straße A, B, C zugeordnet, so daß die Datenbank um den Weg nach J ergänzt werden kann.

Das decodierte linienförmige Objekt kann also ein Endergebnis ("Straßenzug A-B-C-D ...") darstellen oder als Zwischenergebnis die Decodierung anderer Objekte, die nicht in der Datenbank bzw. digitalen Karte des Empfängers vorhanden sind, ermöglichen (Stauende, Jagdhütte).

Um solche in der Datenbank nicht abgelegte Objekte zu erkennen, ist bei einer Weiterbildung des erfindungsgemäßen Verfahrens vorgesehen, daß nach Ermittlung der zur weiteren Decodierung dienenden relativen Lage Punkte des zu decodierenden Objekts auf Korrelation mit Objekten der Karte geprüft werden und daß nicht mit Objekten der Karte korrelierende Punkte des zu decodierenden Objekts als nicht in die Karte eingetragene Verkehrswege erkannt werden. Dabei können vereinzelte Punkte gegebenenfalls außer Acht gelassen werden, da sie möglicherweise auf Ungenauigkeiten bei den vorangegangenen Verfahrensschritten beruhen.

Objekte, die zwar nicht unmittelbar in der Datenbank des Empfängers vorhanden sind, jedoch auf Streckenelementen zwischen in der Datenbank vorhandenen Orten liegen, wie das oben erwähnte Stauende, können durch Zuordnung der gefangenen Punkte zu den Streckenelementen decodiert werden.

Ausführungsbeispiele der Erfindung sind in der Zeichnung anhand mehrerer Figuren dargestellt und in der nachfolgenden Beschreibung näher erläutert. Es zeigt:

Fig. 1    einen Ausschnitt aus einer digitalen Karte und ein empfangenes zu decodierendes Objekt,

Fig. 2    eine Darstellung der in jeweils eine Punktwolke umgewandelten Objekte nach Fig. 1,

Fig. 3    eine Matrix der Anzahl der gefangenen Punkte,

Fig. 4    die eingepaßte Punktwolke des zu decodierenden Objekts und die Punktwolke der Objekte aus der Datenbank,

Fig. 5    eine von einem zu decodierenden Objekt abgeleitete Filtermaske,

Fig. 6    eine Tabelle, welche gefangene Punkte entlang des decodierten Objekts enthält, und

Fig. 7    eine Tabelle zur Zuordnung der Punkte zu Streckenelementen.

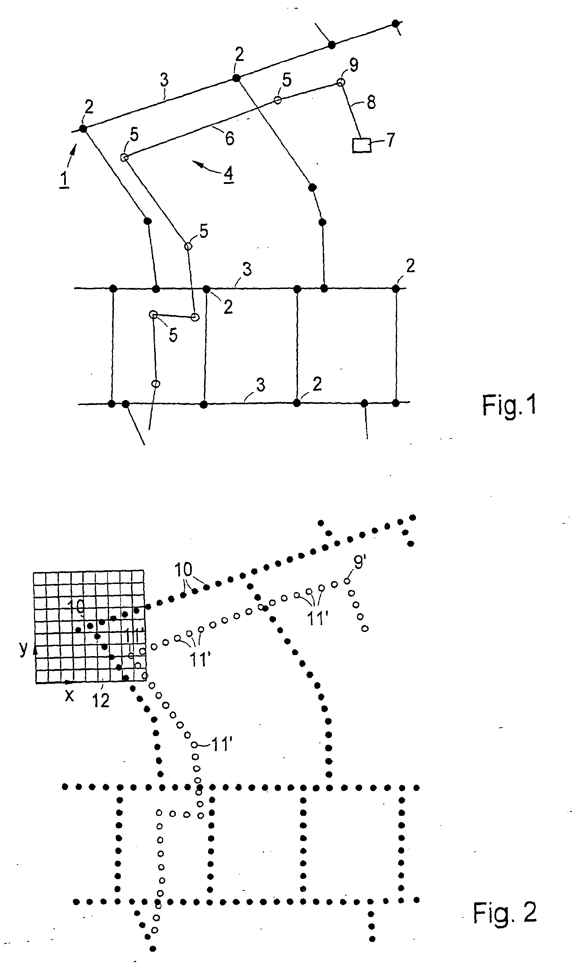

Fig. 1 zeigt einen Ausschnitt aus einer digitalen Karte, die im Empfänger gespeichert ist, mit einem Straßennetz 1, wobei die Stützpunkte 2 als Vektoren abgelegt sind mit Informationen, welche der Stützpunkte 2 durch Streckenelemente 3 miteinander verbunden sind. Ein zu decodierendes Objekt 4 besteht aus einem Streckenzug mit Stützpunkten 5 und Streckenelementen 6. Außerdem weist das zu decodierende Objekt einen Endpunkt 7 auf, der über ein Streckenelement 8 mit dem benachbarten Stützpunkt 9 verbunden ist. Wie in Fig. 1 erkennbar, unterscheidet sich der Streckenzug 5, 6 von einem Teil des Straßennetzes 1 lediglich durch eine Parallelverschiebung. Diese kann beispielsweise durch die Verwendung unterschiedlicher geographischer Koordinaten beim Sender und Empfänger bedingt sein.

Zur Decodierung des Objekts 4 nach dem erfindungsgemäßen Verfahren werden zunächst das Straßennetz 1 und das Objekt 4 durch äquidistante Punkte 10, 11 (Fig. 2) dargestellt. Dies erfolgt durch eine Interpolation, im einfachsten Fall durch sukzessives Hinzuaddieren differentieller Verschiebungsvektoren. Die Interpolationsabstände sind jeweils gleich. Die erhaltenen Punkte 10, 11 werden abgespeichert, wobei die Adressen der ursprünglichen Streckenelemente in geeigneter Weise mitgeführt werden, so daß im Speicher dann eine speicherplatzsparende Liste der Originaladressen der Streckenelemente und der Off-Sets der Interpolationspunkte innerhalb der jeweiligen Punktmenge vorliegt.

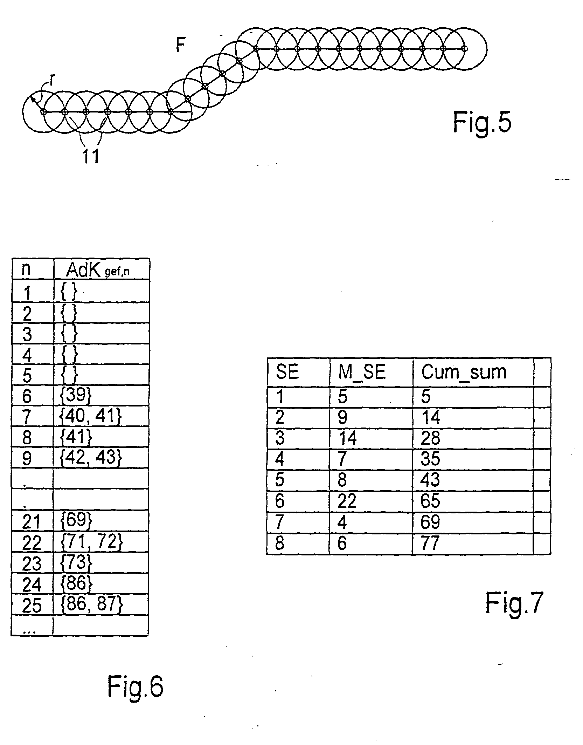

Die aus dem Straßennetz hervorgegangene Punktmenge wird im folgenden mit K bezeichnet. Die Punktmenge des Objekts 4 wird als Filtermaske F benutzt (Beispiel in Fig. 5), wobei jedem der Punkte 11 ein Fangradius r zugeordnet ist. Die Filtermaske wird dann in x- und y-Richtung verschoben, wie es durch ein Raster 12 angedeutet ist. An jedem Verschiebungsort (x, y) wird geprüft, ob innerhalb eines Kreises mit dem Radius r um einen Punkt $F_n$ der Filtermaske F ein oder mehrere Punkte $K_m$ der Punktmenge K liegen, das heißt, ob die Bedingung

$$\left\lfloor \left| F_{x,y,n} - K_m \right| \leq r \right\rfloor = \{0;1\}$$

erfüllt ist. Durch Aufsummieren der Ergebnisse wird dann die Gesamtzahl der gesamten Punkte nach folgender Gleichung gewonnen:

$$GP_{x,y} = \sum_n \sum_m \left\lfloor \left| F_{x,y,n} - K_m \right| \leq r \right\rfloor$$

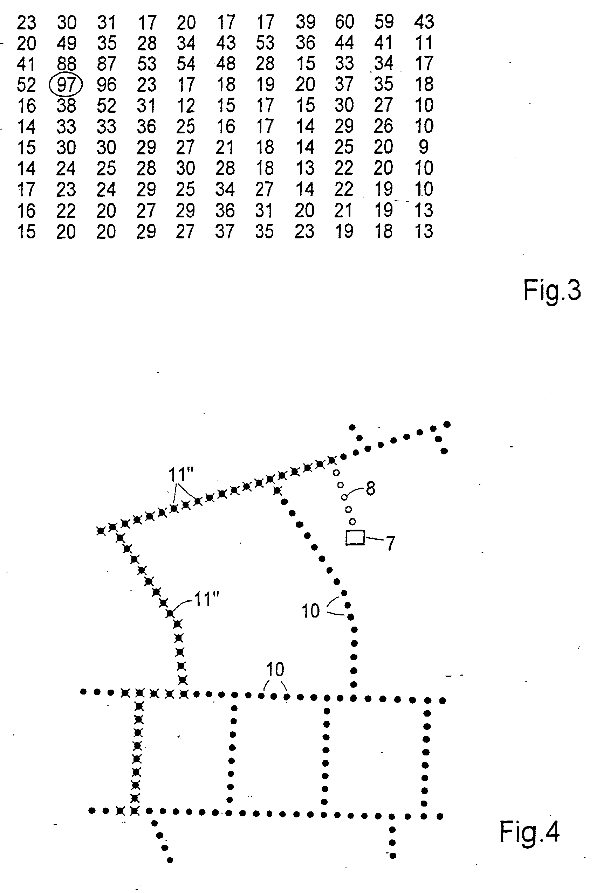

Dadurch erhält man die in Fig. 3 dargestellte Tabelle, worauf ermittelt wird, daß bei der Verschiebung "$x_{max}=1$" und "$y_{max}=8$" die größte Zahl, nämlich 97 vorliegt.

Fig. 4 zeigt eine um $x_{max}$ und $y_{max}$ verschobene Punktwolke des zu decodierenden Objekts, wobei dann die mit den Punkten des Straßennetzes korrelierenden Punkte durch Kreuze hervorgehoben sind.

Nach diesem Vorgang können die gewonnenen Verschiebungen auf ihre Plausibilität hin überprüft werden. Dazu müssen lediglich die gefangenen Punkte auf partielle Konsistenz ihrer Verkettung hin überprüft werden, was beispielsweise dadurch erfolgt, daß mit einer Bitmaske der betroffene Streckenzug per Und-Funktion abgefahren wird und dabei Lücken (also zusammenhängende Bereiche nicht gefangener Punkte) detektiert werden.

Erforderlichenfalls kann durch einen weiteren Schritt eine Feinkorrektur vorgenommen werden, wozu die bereits verschobene Filtermaske soweit in kleineren Schritten verschoben wird, daß die Summe der Betragsquadrate der Vektorsummen der Differenzvektoren der einzelnen Punkte der Filtermaske zu den jeweils gefangenen Punkten des Straßennetzes minimiert wird. Für den Fall nur eines gefangenen Punktes je Punkt der Filtermaske ist das Ergebnis die übliche Fehlerbetragsquadrat-Minimierung. Bei mehreren gefangenen Punkten ergibt sich ein optimales "Einhängen" der Maske in die Punktmenge des Straßennetzes.

Im einzelnen geschieht dies wie folgt: Die mit der grob bestimmten Verschiebung beaufschlagte Filtermaske wird erneut mit den Punkten des Straßennetzes korreliert, wobei die Arrays (mit sizeof(F) = N) der Vektorsummen V und der Zahl der jeweils gefangenen Punkte G ausgegeben werden. Zu bestimmen ist danach die Korrekturverschiebung d gemäß der Extremalforderung

$$\sum_n^N \left| \left( F_n + d - (1/G_n) \cdot \sum_m^G K_{gef,n} \right) \right| \longrightarrow Min$$

wobei nach Bilden der partiellen Ableitung

$$\delta(\ldots)/dt = \sum_n^N (d + V_n/G_n) = 0$$

sich

$$d = -(1/N)\sum_{n}^{N}(V_n/G_n).$$

ergibt. Dabei ist der Fall $G_n = 0$ ausgeschlossen, was zum Beispiel dadurch geschehen kann, daß die Vektorsummen $V_n$ zunächst mit 0 initialisiert werden und im Falle $G_n = 0$ gesetzt wird $G_n = 1$ und $N = N-1$.

Bei endgültig verschobener Filtermaske können die gefangenen Punkte im einzelnen bestimmt werden, wozu für die einzelnen Filterpunkte festgelegt wird, welcher Punkt des Straßennetzes mit diesem korreliert. Das Ergebnis eines solchen Vorgangs ist in Fig. 6 als Tabelle dargestellt. Daraus ist ersichtlich, daß die Punkte $F_1$ bis $F_5$ ohne entsprechenden Punkt des Straßennetzes sind. Hieraus ist ersichtlich, daß dieses Streckenelement der Filtermaske nicht in der Datenbank des Empfängers eingetragen ist. Es kann am Punkt 39 des Straßennetzes an dieses angebunden werden.

Eine Referenz von den Elementen der Punktmenge K auf die Streckenelemente des Straßennetzes ist beispielsweise im folgenden erläutert: Dabei bedeutet SE die Nummer des Streckenelementes, wobei die Reihenfolge gemäß der Wandlung in die Punktmenge K, welche in einer festgelegten Richtung erfolgt, festgelegt ist. M_SE stellt die Zahl der Punkte des Streckenelementes SE nach der Interpolation dar. Die Referenz von einem gefangenen Punkt (mit der Adresse m) auf das zugehörige Streckenelement kann nun durch einfaches Bilden der kumulativen Summe der M_SE-Spalte erfolgen, indem von SE = 1 beginnend das zu referenzierende m auf die Bedingung m ≤ cum_sum (M_SE) hin untersucht wird und das erste die Bedingung erfüllende Streckenelement SE zugeordnet wird. Aus Fig. 7 ist ersichtlich, daß es genügt, ein Array der kumulierten Summe für 1 bis SE abzulegen.

**Patentansprüche**

1. Verfahren zur Decodierung von linienförmigen geographischen Objekten mit Hilfe einer Datenbank, die ein Verkehrswegenetz mit linienförmigen Objekten enthält,
**dadurch gekennzeichnet,**
**daß** jeweils eine Menge von Punkten eines zu decodierenden Objektes und der Objekte des Verkehrswegenetzes gebildet wird,
**daß** für mehrere relative Lagen der Punktmengen zueinander für eine der Punktmengen die Zahl von Punkten ermittelt wird, welche innerhalb eines vorgegebenen Abstandes mindestens eines Punktes der anderen Punktmenge liegen, und daß das zu decodierende Objekt in derjenigen relativen Lage, in der die Zahl am größten ist, durch Ausgabe des dann mit dem Objekt korrelierten Teils des Verkehrswegenetzes decodiert wird.

2. Verfahren nach Anspruch 1, **dadurch gekennzeichnet, daß** die Objekte als Vektoren vorliegen und daß eine Menge von im wesentlichen gleichbeabstandeten Punkten durch Interpolation gebildet werden.

3. Verfahren nach einem der Ansprüche 1 oder 2, **dadurch gekennzeichnet, daß** um die Punkte einer der Punktmengen ein Radius als vorgegebener Abstand geschlagen wird, der mindestens dem halben Abstand der Punkte innerhalb einer Punktmenge entspricht.

4. Verfahren nach Anspruch 3, **dadurch gekennzeichnet, daß** der Radius dem Abstand der Punkte innerhalb einer Punktmenge entspricht.

5. Verfahren nach einem der vorhergehenden Ansprüche, **dadurch gekennzeichnet, daß** bei einer weiteren, feineren Verschiebung die Summe der Betragsquadrate der Vektorsummen der Differenzvektoren der einzelnen Punkte der Maske zu den jeweils gefangenen Punkten der Karte minimiert wird.

6. Verfahren nach einem der vorhergehenden Ansprüche, **dadurch gekennzeichnet, daß** die Verschiebung innerhalb eines orthogonalen Rasters erfolgt.

7. Verfahren nach Anspruch 6, **dadurch gekennzeichnet, daß** die Verschiebung nur in einem Bereich vorgenommen wird, in dem mögliche Ablagen des zu decodierenden Objekts von den Objekten des Verkehrswegenetzes liegen.

8. Verfahren nach einem der vorhergehenden Ansprüche, **dadurch gekennzeichnet, daß** nach Ermittlung der zur weiteren Decodierung dienenden relativen Lage Punkte des zu decodierenden Objekts auf Korrelation mit Objekten der Karte geprüft werden und daß nicht mit Objekten der Karte korrelierende Punkte des zu decodierenden Objekts als nicht in die Karte eingetragene Verkehrswege erkannt werden.

9. Verfahren nach einem der vorhergehenden Ansprüche, **dadurch gekennzeichnet, daß** Objekte, die zwar nicht unmittelbar in der Datenbank des Empfängers vorhanden sind, jedoch auf Streckenelementen zwischen in der Datenbank vorhandenen Orten liegen, durch Zuordnung der gefangenen Punkte zu den Streckenelementen decodiert werden.

**Claims**

1. Method for decoding linear geographical objects with the aid of a database which includes a traffic network with linear objects, **characterized**
   **in that** in each case a set of points of an object to be decoded and of the objects of the traffic network is formed,
   **in that** for one of the point sets there is determined for a number of relative positions of the point sets in relation to one another the number of points which lie within a prescribed distance of at least one point of the other point set, and
   **in that** the object to be decoded is decoded in that relative position in which the number is greatest by outputting the part of the traffic network then correlated with the object.

2. Method according to Claim 1, **characterized in that** the objects are present as vectors, and **in that** a set of substantially equally spaced points are formed by interpolation.

3. Method according to either of Claims 1 and 2, **characterized in that** around the points of one of the point sets a radius is put as prescribed distance which corresponds at least to half the distance of the points within a point set.

4. Method according to Claim 3, **characterized in that** the radius corresponds to the distance of the points within a point set.

5. Method according to one of the preceding claims, **characterized in that** in the case of a further, finer displacement the sum of the squares of the magnitude of the vector sums of the difference vectors of the individual points of the mask are minimized relative to the respectively captured points of the map.

6. Method according to one of the preceding claims, **characterized in that** the displacement is performed inside an orthogonal raster.

7. Method according to Claim 6, **characterized in that** the displacement is undertaken only in a region in which possible offsets of the object to be decoded from the objects of the traffic network are situated.

8. Method according to one of the preceding claims, **characterized in that**, after determining the relative position serving for further decoding, points of the object to be decoded are tested for correlation with objects of the map, and **in that** points of the object to be decoded which are not correlated with objects of the map are detected as traffic routes not entered into the map.

9. Method according to one of the preceding claims, **characterized in that** objects which are admittedly not present in the database of the receiver but do lie on route elements between locations present in the database are decoded by assigning the captured points to the route elements.

**Revendications**

1. Procédé de décodage d'objets géographiques de forme linéaire à l'aide d'une banque de données contenant un réseau de chemins de circulation avec des objets de forme linéaire,
   **caractérisé en ce qu'**
   on constitue chaque fois un ensemble de points d'un objet à décoder et des objets du réseau de chemin de circulation,

   - **en ce que** pour plusieurs positions relatives des ensembles de points, on détermine pour l'un des ensembles de points, le nombre de points situés à l'intérieur d'une distance prédéfinie d'au moins un point de l'autre ensemble de points et
- **en ce qu'**on décode l'objet dans celle des positions relatives dans laquelle le nombre est le plus grand, par l'émission de la partie du réseau de chemins de circulation alors en corrélation avec l'objet.

**2.** Procédé de décodage selon la revendication 1,
**caractérisé en ce que**
les objets sont disponibles sous forme de vecteurs et on forme un ensemble de points pratiquement équidistants par interpolation.

**3.** Procédé dé décodage selon l'une des revendications 1 ou 2,
**caractérisé en ce qu'**
on applique aux points de l'un des ensembles de points, un rayon comme distance prédéfinie qui correspond au moins à la demi-distance des points à l'intérieur de cet ensemble de points.

**4.** Procédé de décodage selon la revendication 3,
**caractérisé en ce que**
le rayon correspond à la distance des points dans un ensemble de points.

**5.** Procédé de décodage selon l'une des revendications précédentes,
**caractérisé en ce que**
pour un autre décalage plus fin, on minimise la somme des carrés des amplitudes des vecteurs-somme des vecteurs de différence des divers points des masques par rapport aux points saisis sur la carte.

**6.** Procédé de décodage selon l'une des revendications précédentes,
**caractérisé en ce que**
le décalage se fait à l'intérieur d'une trame orthogonale.

**7.** Procédé de décodage selon la revendication 8,
**caractérisé en ce que**
le décalage n'est fait que dans une zone dans laquelle se situent les dépôts possibles de l'objet à décoder parmi les objets du réseau de chemins de circulation.

**8.** Procédé de décodage selon l'une des revendications précédentes,
**caractérisé en ce qu'**
après avoir déterminé la position relative servant à la poursuite du décodage, on vérifie les points de l'objet à décoder en corrélation avec les objets de la carte et,
on reconnaît comme points non en corrélation avec les objets de la carte, pour l'objet à décoder comme étant des chemins de circulation non enregistrés dans la carte.

**9.** Procédé de décodage selon l'une des revendications précédentes,
**caractérisé en ce que**
les objets qui n'existent certes pas directement dans la banque de données du récepteur mais qui néanmoins se situent sur des éléments de chemin entre les lieux existants dans la banque de données, sont décodés par association des points recueillis aux éléments de trajet.

Fig.1

Fig. 2

| 23 | 30 | 31 | 17 | 20 | 17 | 17 | 39 | 60 | 59 | 43 |
|----|----|----|----|----|----|----|----|----|----|----|
| 20 | 49 | 35 | 28 | 34 | 43 | 53 | 36 | 44 | 41 | 11 |
| 41 | 88 | 87 | 53 | 54 | 48 | 28 | 15 | 33 | 34 | 17 |
| 52 | (97) | 96 | 23 | 17 | 18 | 19 | 20 | 37 | 35 | 18 |
| 16 | 38 | 52 | 31 | 12 | 15 | 17 | 15 | 30 | 27 | 10 |
| 14 | 33 | 33 | 36 | 25 | 16 | 17 | 14 | 29 | 26 | 10 |
| 15 | 30 | 30 | 29 | 27 | 21 | 18 | 14 | 25 | 20 | 9 |
| 14 | 24 | 25 | 28 | 30 | 28 | 18 | 13 | 22 | 20 | 10 |
| 17 | 23 | 24 | 29 | 25 | 34 | 27 | 14 | 22 | 19 | 10 |
| 16 | 22 | 20 | 27 | 29 | 36 | 31 | 20 | 21 | 19 | 13 |
| 15 | 20 | 20 | 29 | 27 | 37 | 35 | 23 | 19 | 18 | 13 |

Fig.3

Fig.4

F

r

11

Fig.5

| n | AdK gef,n |
|---|---|
| 1 | { } |
| 2 | { } |
| 3 | { } |
| 4 | { } |
| 5 | { } |
| 6 | {39} |
| 7 | {40, 41} |
| 8 | {41} |
| 9 | {42, 43} |
| . | |
| . | |
| . | |
| 21 | {69} |
| 22 | {71, 72} |
| 23 | {73} |
| 24 | {86} |
| 25 | {86, 87} |
| ... | |

Fig.6

| SE | M_SE | Cum_sum | |
|---|---|---|---|
| 1 | 5 | 5 | |
| 2 | 9 | 14 | |
| 3 | 14 | 28 | |
| 4 | 7 | 35 | |
| 5 | 8 | 43 | |
| 6 | 22 | 65 | |
| 7 | 4 | 69 | |
| 8 | 6 | 77 | |

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19835051
- DE 19942524